# EUROPÄISCHE PATENTSCHRIFT

(11) **EP 0 317 592 B1**
(45) Veröffentlichungstag und Bekanntmachung des Hinweises auf die Patenterteilung: **03.03.1993**
(21) Anmeldenummer: 88904524.1
(22) Anmeldetag: 20.05.1988
(51) Int. Cl.: G01B 5/00

(54) **KOORDINATENMESSGERÄT**
CO-ORDINATE MEASURING INSTRUMENT
APPAREIL DE MESURE DE COORDONNEES

(30) Priorität: 23.05.1987 DE 3717459
(43) Veröffentlichungstag der Anmeldung: 31.05.1989
(73) Patentinhaber: Carl Zeiss, D-73446 Oberkochen (DE); CARL ZEISS-STIFTUNG HANDELND ALS CARL ZEISS, D-89518 Heidenheim (Brenz) (DE)
(72) Erfinder: HERZOG, Klaus, D-7082 Oberkochen (DE)
(86) Internationale Anmeldenummer: EP8800450
(87) Internationale Veröffentlichungsnummer: WO8809478

(56) Entgegenhaltungen:
- EP-A- 0 216 041
- GB-A- 18 297
- GB-A- 2 173 311
- Patent Abstracts of Japan, Band 10, Nr. 157 (P-464)(2213), 6. Juni 1986, & JP-A-6111607

## Beschreibung

Die Erfindung betrifft ein Verfahren zur Ermittlung der Koordinatenwerte eines Tastelementes sowie ein auf der Basis dieses Verfahrens arbeitendes Koordinatenmeßgerät.

Mehrkoordinatenmeßgeräte gibt es in den verschiedensten Ausführungsformen. Eine Übersicht über die unterschiedlichen Bauformen gibt der Artikel von M. Dietsch und H. Lang in Feinwerktechnik und Meßtechnik 86 (1978) Seite 262-269. Allen darin beschriebenen Geräten liegt im Prinzip der gleiche Aufbau zugrunde: Die Geräte bestehen aus drei senkrecht zueinander angeordneten und aufeinander aufbauenden Führungen, längs derer der Tastkopf verschiebbar ist, sowie drei den Führungen zugeordneten Linearmaßstäben.

Da die erste Führung jeweils das Gewicht der darauf aufbauenden, weiteren Führungen tragen muß, ist zur Erreichung einer ausreichend hohen Meßgenauigkeit eine stabile Ausbildung für die Führungen erforderlich, die Deformationen während des Meßvorganges verhindert. Koordinatenmeßgeräte sind deshalb teure und aufwendige Präzisionsinstrumente.

Es sind auch Koordinatenmeßgeräte bekannt, die nicht in einem kartesischen Koordinatensystem, sondern in Kugel- oder Zylinderkoordinaten messen. So ist z.B. in der GB-PS 14 98 009 ein Koordinatenmeßgerät beschrieben, bei dem der Tastkopf mittels dreier hintereinander angeordneter Gelenke beweglich gehalten ist. Die Lage des Tastkopfes wird bei diesem Gerät mit Hilfe von in den Gelenken angeordneten Winkelgebern festgestellte Ein ähnlich aufgebautes Koordinatenmeßgerät ist aus der US-PS 42 40 205 bekannt. Bei diesem Gerät ist der Tastkopf an einer vertikal verschiebbaren Pinole befestigt, die ihrerseits über drei Gelenke mit vertikal angeordneter Drehachse in einer Ebene geführt ist. Die Lage der Pinole in der Ebene wird mit Hilfe eines Maßstabes und eines Drehgebers gemessen.

Auch bei diesen beiden letztgenannten Geräten, die statt Linearführungen Drehachsen zur Führung des Tastkopfes verwenden, stützen sich die beweglichen Teile der Geräte aufeinander ab. Es werden deshalb Gegengewichte benötigt, mit denen die beweglichen Maschinenteile ausbalanciert werden müssen, was das Gewicht und die Masse der bewegten Maschinenteile vergrößert. Außerdem ist es erforderlich, die Lagerungen für die Drehachsen sehr stabil auszuführen, da sie jeweils das Gewicht der darauf aufbauenden Teile tragen müssen.

Dennoch ist es nicht möglich, mit diesen Geräten ausreichend genaue Messungen durchzuführen, da die einzelnen Teile des Gelenkarmes während der Messungen wechselnden Lastverhältnissen ausgesetzt sind und sich deshalb unkontrolliert deformieren.

Desweiteren sind sogenannte Höhenmeßgeräte bekannt. Sie bestehen aus einem in einer Ebene manuell frei verschiebbaren Träger, an dem ein Längenmeßtaster vertikal verschiebbar geführt ist. Mit dem der Führung zugeordneten Maßstab lassen sich allein die Höhen des Tasters über der Ebene an verschiedenen Stellen über der Ebene messen und in Relation bringen. Die Lage des Höhenmeßgerätes in dieser Ebene wird nicht erfaßt. Zudem ist der Tastkopf eines Höhenmeßgerätes wenn überhaupt dann nur entlang der Vertikalen auslenkbar.

Diese bekannten Höhenmeßgeräte sind also keine Mehrkoordinatenmeßgeräte, da sie nur zur Messung in einer einzigen Dimension geeignet sind. Zwar ist auch schon ein Höhenmeßgerät bekannt geworden, das über eine Kulissenführung in zwei Koordinaten geführt ist und dessen Lagekoordinaten in der Ebene durch den Kulissenführungen zugeordnete Maßstäbe ermittelt wird. Dieses Gerät entspricht jedoch wieder dem eingangs genannten, prinzipiellen Aufbau bekannter Mehrkoordinatenmeßgeräte und besitzt deshalb u.a. den Nachteil, daß Rechtwinkligkeitsfehler der Führungen direkt in das Meßergebnis eingehen. Außerdem läßt sich dieses bekannte Gerät nicht drehen, so daß zusätzlich ein Drehtisch für das zu vermessende Werkstück benötigt wird.

Aus der DE-OS 32 05 362 sowie der DE-OS 36 29 689 sind Koordinatenmeßgeräte auf der Basis eines von Hand bzw. von einem Roboter über das zu vermessende Werkstück geführten Tastelementes bekannt, welches aus verschiedenen Richtungen mit Hilfe von Laser-Entfernungsmessern angemessen wird. Diese Geräte besitzen jedoch den Nachteil, daß die winkelmäßige Ausrichtung des Tastelementes nur unter hohem Aufwand und selbst dann nicht in jeder Lage im Meßraum bestimmt werden kann. Außerdem kann mit dem Tastelement das zu vermessende Werkstück nicht ohne weiteres umfahren werden, da dann zumindest einige der Meßstrahlen unterbrochen würden.

Aus der EP 0 216 041 ist ein Koordinatenmeßgerät auf der Basis eines in einer Ebene frei verschiebbaren Höhenmeßgerätes bekannt. Die Lage des Höhenmeßgerätes in der Ebene wird dort mit Hilfe zweier Sensoren im Fuß des Gerätes ermittelt, die ein in der Grundplatte, auf der das Höhenmeßgerät verschiebbar ist, eingelassenes Kreuzgitter abtasten. Die Herstellung einer solchen Grundplatte in der für Koordinatenmeßgeräte erforderlichen Größe und erforderlichen Genauigkeit ist sehr aufwendig.

In der GB-A-2 173 311 ist eine Digitalisier-Einrichtung beschrieben, mit der die Lage eines Punktes in einer Ebene durch zwei Auszüge variabler Länge bestimmt sind, die nach Art eines Dreiecks an zwei festen Punkten drehbar angelenkt sind. Inwieweit diese Einrichtung zum Aufbau eines dreidimensional messenden und frei verschieblichen Koordinatenmeßgerätes benutzt werden kann, dafür gibt die genannte Schrift keinen Hinweis.

Es ist die Aufgabe der vorliegenden Erfindung, ein Verfahren zur Ermittlung der Koordinatenwerte eines Tastelementes anzugeben, das es erlaubt, mit möglichst geringem Aufwand eine Vielzahl verschiedener Meßaufgaben mit ausreichend hoher Genauigkeit in allen Raumrichtungen durchzuführen, sowie ein zur Durchführung des Verfahrens geeignetes Koordinatenmeßgerät zu schaffen.

Diese Aufgabe wird durch die im Kennzeichen des Anspruches 1 angegebenen Merkmale gelöst.

Die erfindungsgemäße Lösung besitzt mehrere Vorteile: Der Träger des Tastkopfes stützt sich auf einer ebenen Führungsplatte ab und kann dort frei manuell oder motorisch verschoben werden. Es ist deshalb möglich, die Lage dieses Trägers in der Ebene mit einem Gelenkarm und diesem zugeordneten Meßsystemen festzustellen, der keinerlei Gewicht zu tragen hat. Der Gelenkarm wird einfach an einem Ende an der Führungsplatte und am anderen Ende am Träger angelenkt und kann sich auch beispielsweise selbst über zusätzliche Luftlager auf der Führungsplatte abstützen. Es sind daher keine großdimensionierten Drehachsen oder Gegengewichte erforderlich, so daß die ganze Anordnung eine geringe Masse besitzt und leicht bewegt werden kann. Da der Gelenkarm selbst keine Lasten zu tragen hat, treten keine Verbiegungen im Gelenkarm auf, was der Meßgenauigkeit des Gerätes zugute kommt. Außerdem sind Rechtwinkligkeitsfehler bei der Ermittlung der Ebenenkoordinaten vermieden, da keine aufeinander auf bauenden Führungen verwendet werden. Das Gerät ist zudem in der Ebene drehbar, so daß eine Vielzahl von Meßaufgaben auch ohne Drehtisch für das Werkstück gelöst werden können. Der erfindungsgemäße Aufbau ermöglicht es, Koordinatenmeßgeräte in kompakter und vereinfachter Bauform bei gleichzeitig guter Zugänglichkeit des Meßraums zu schaffen.

Der bzw. die Gelenkarme, mit denen der Träger an der Führungsplatte befestigt ist, kann auf unterschiedlicher Art und Weise ausgeführt werden. So ist es beispielsweise möglich, einen aus drei Drehachsen aufgebauten Gelenkarm oder einen aus zwei Drehachsen und einem Auszug variabler Länge aufgebauten Gelenkarm zu verwenden oder sogar zwei Gelenkarme vorzusehen. Die Lage des Trägers in der Ebene läßt sich ohne weiteres durch den Drehachsen zugeordnete Winkelgeber bzw. den Auszügen variabler Länge zugeordnete Maßstäbe ermitteln. Hierbei erfolgt die Berechnung der genauen Koordinatenwerte aus den Signalen der Meßwertgeber durch einen daran angeschlossenen elektronischen Rechner.

Besonders vorteilhaft kann es sein, wenn der oder die Gelenkarme am oberen Ende des Trägers angelenkt sind, wo sie nicht mit den auf der ebenen Führungsplatte aufgebauten Werkstücken kollidieren können. Der Träger kann dann um 360^{o} frei um das Werkstück herumgeführt werden, so daß ein separater Drehtisch für das Werkstück entbehrlich ist.

Von besonderem Vorteil ist hierbei, wenn der Abstand zwischen der vertikalen Drehachse, an der die Gelenkarme angelenkt sind, und der Tastkugel möglichst gering ist. Denn je kleiner dieser Abstand ist, desto ungenauer kann das zur Messung dieses Drehwinkels verwendete Winkelmeßsystem sein bzw. wird dann keine besonders hohe Auflösung für den Winkelgeber gefordert.

Um diese Bedingung geometrisch einhalten zu können, besitzt der Träger zweckmäßig eine etwa C-förmige Gestalt, indem eine schlanke Säule auf einer im Querschnitt großflächigeren Grundplatte aufbaut. Am oberen Ende besitzt die Säule einen in Richtung des Taststifts vorstehenden Arm. An diesem ist das Drehgelenk angeordnet ist, über das die Gelenkarme an das Höhenmeßgerät angebunden sind.

Außerdem ist dann der Werkstücktisch zweckmäßig mit einem mittig angeordneten, schlanken Fuß versehen, derart, daß der Träger mit seiner Grundplatte unter die Tischfläche und damit nahe an das Werkstück heranfahren kann. Diese Form des Werkstücktisches bietet außerdem weitere Vorteile. Denn der schlanke Fuß des Tisches kann als Bezugspunkt für den Gelenkarm dienen. Wenn dieser um den Fuß drehbar am Werkstück angelenkt ist, läßt sich der Träger ebenfalls um 360^{o} frei um das Werkstück herumführen.

Zur Erreichung möglichst hoher Meßgenauigkeiten muß sichergestellt werden, daß keine Meßfehler infolge Verkippungen des Trägers um die vertikale Achse entstehen. Diese können kompensiert werden, indem entweder Meßsysteme in der Grundplatte des Trägers angeordnet werden, die den Abstand zur Führungsplatte messen, oder direkt die Neigung messende elektronische Waagen am Träger angebracht werden.

Wenn man mit Sensoren arbeitet, die den Abstand zur Oberfläche der ebenen Führungsplatte messen, dann geht deren Genauigkeit bzw. die Abweichung ihrer Topographie von einer idealen Ebene in das Meßergebnis ein. Um diesen Einfluß zu eliminieren ist es zweckmäßig, die Topographie der ebenen Führungsplatte in einem separaten Korrekturlauf vorab zu ermitteln und als zweidimensionale Korrekturmatrix abzuspeichern.

Das auf der Basis des erfindungsgemäßen Verfahrens arbeitende Koordinatenmeßgerät kann sowohl handgeführt betrieben werden als auch mit einem Antrieb versehen werden, der den Träger in der Ebene verschiebt. Ein derartiger Antrieb sollte vorzugsweise im Schwerpunkt des Trägers an diesem angreifen. Dies ermöglicht hohe Verfahrgeschwindigkeiten und Beschleunigungen. Da ein solcher Antrieb eventuell jedoch die freie Drehbarkeit des Trägers um 360^{o} behindern kann, ist dann das Werkstück auf einem Drehtisch anzuordnen, damit die freie Zugänglichkeit von allen Richtungen aus gewährleistet ist, oder es wird mit zwei gleichartig aufgebauten Geräten beiderseits des festmontierten Werkstückes gemessen.

Weitere Vorteile der Erfindung ergeben sich aus der nachstehenden Beschreibung von Ausführungsbeispielen anhand der Figuren 1-4 der beigefügten Zeichnungen.
- Figur 1: ist eine perspektivische Prinzipskizze der mechanischen Teile des erfindungsgemäßen Koordinatenmeßgerätes nach einem ersten Ausführungsbeispiel;
- Figur 2: ist eine Prinzipskizze eines zweiten, bezüglich des Gelenkarmes abgewandelten Ausführungsbeispiels der
- Figur 3: ist eine Prinzipskizze eines dritten Ausführungsbeispiels der Erfindung mit zwei Gelenkarmen;
- Figur 4: ist die Prinzipskizze eines vierten Ausführungsbeispiels der Erfindung.

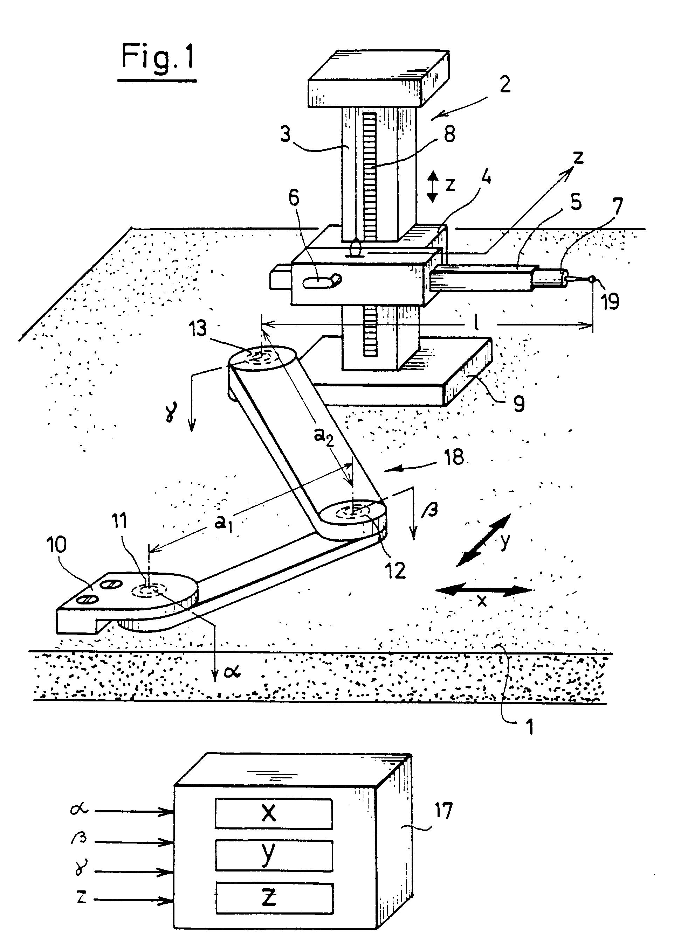

Das in Figur 1 dargestellte Koordinatenmeßgerät baut im wesentlichen auf einem Höhenmeßgerät (2) bekannter Bauart auf, das auf einer ebenen Granitplatte (1) verschiebbar ist. Ein solches Höhenmeßgerät besteht aus einer vertikalen Säule (3), entlang der ein Schlitten (4) in der Höhe, d.h. in Z-Richtung verschiebbar ist. Zur Messung der Z-Position trägt die Säule (3) einen Maßstab (8), der von einem in der Darstellung nicht sichtbaren photoelektrischen Gebersystem im Schlitten (4) abgetastet wird. Im Schlitten (4) ist ein Arm (5) waagerecht verschiebbar gelagert. Der Arm (5) trägt an seinem Ende einen Taster (7) und kann mittels einer Klemmeinrichtung im Schlitten (4) über den mit (6) bezeichneten Hebel festgeklemmt werden.

Das Gewicht von Schlitten (4), Meßarm (5) und Tastkopf (7) ist über ein in der Säule (3) geführtes Gegengewicht ausbalanciert.

Damit das Höhenmeßgerät (2) reibungsfrei verschoben werden kann, stützt es sich über in der Basis (9) der Säule (3) integrierte Luftlager auf der Granitplatte (1) ab.

Allerdings ist der Tastkopf (7) kein eindimensionaler Längenmeßtaster, sondern vielmehr ein in allen drei Richtungen ansprechender 3D-Tastkopf z.B. des in der US-PS 41 77 568 beschriebenen Typs.

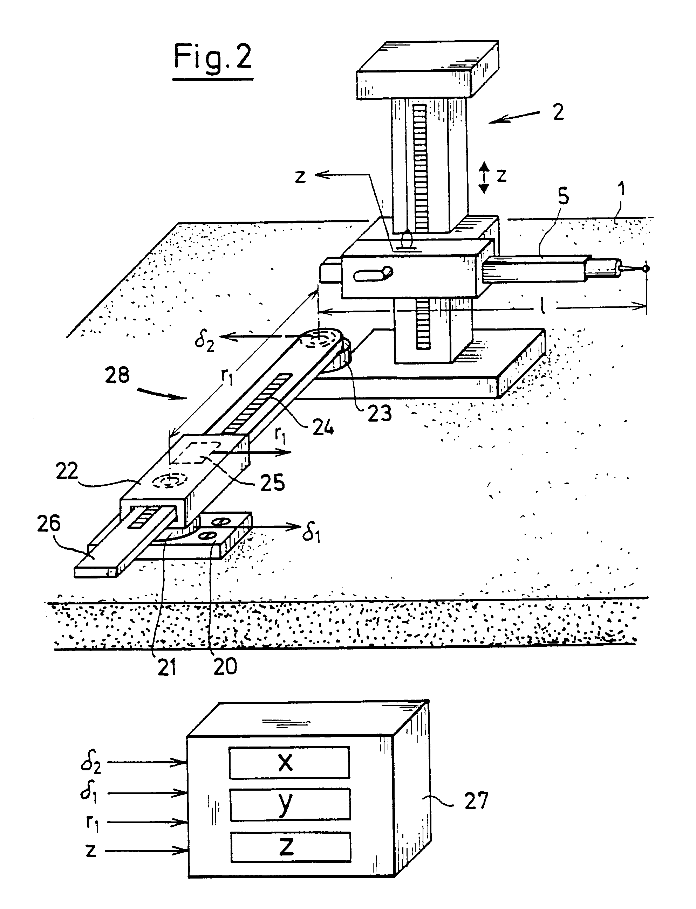

Das hier anhand von Figur 1 beschriebene Höhenmeßgerät ist bei gleichem Aufbau auch Bestandteil der Ausführungsbeispiele nach Figur 2-4.

Wie bereits eingangs ausgeführt erfassen Höhenmeßgeräte allein die Höhen (Z) der vom Tastkopf (7) angetasteten Meßpunkte. Damit auch die Koordinatenwerte (X und Y) in der Ebene in der Granitplatte (1) meßtechnisch erfaßt werden, ist die Basis (9) des Höhenmeßgerätes (2) über einen Gelenkarm (18) mit der feststehenden Granitplatte (1) verbunden.

Der Gelenkarm (18) besteht aus zwei Teilen, wobei der erste Teil mittels eines ersten Drehgebers (11) gegenüber einer an die Granitplatte (1) angeschraubten Halteplatte (10) drehbar gelagert ist, der zweite Teil mittels eines zweiten Drehgelenks (12) am ersten Teil befestigt ist und zusätzlich mittels eines dritten Drehgelenks (13) an die Grundplatte (9) des Höhenmeßgerätes (2) angelenkt ist. Der Gelenkarm (18) erlaubt somit ein freies Verschieben des HöhenmeßgeräteS (2) und hat keinerlei Lasten außer seinem eigenen Gewicht zu tragen. Er kann deshalb einschließlich der Lager für die Drehgelenke (11,12 und 13) kostengünstig hergestellt werden. Das Eigengewicht des Gelenkarmes (18) läßt sich außerdem durch ein unterhalb des Gelenkes (12) angebrachteS Luftlager abfangen, so daß während eines Meßvorganges es nicht zu wechselnden Lastverhältnissen in Bezug auf die Lager des Drehgelenkes kommt, d.h. die Bewegungen des Höhenmeßgerätes üben keine Kräfte auf die meßtechnisch relevanten Komponenten des Gerätes aus.

In die drei Drehgelenke (11,12 und 13) sind drei Winkelencoder eingebaut, von denen die Winkelstellungen α, β und γ der verdrehten bzw. verschwenkten Teile gemessen werden. Zusammen mit den bekannten Längen a₁ und a₂ der Teile zwischen den Drehachsen der Gelenke (11 und 12) bzw (12 und 13) und der Auszuglänge (l) des Meßarmes (5) des HöhenmeßgeräteS ist die Lage der Tastkugel (19) am Taststift des Tastkopfes (7) eindeutig bestimmt.

Die Drehgeber in den Gelenken (11,12 und 13) und das Gebersystem für den Maßstab (8) am Höhenmeßgerät (2) sind an einen Rechner (17) angeschlossen, der aus den gewonnenen Winkeln α, β, γ, dem gemessenen Höhenwert (Z) und den vorab eingegebenen Parametern (a₁, a₂) und (l) die Lage der Tastkugelmitte (19) in kartesischen Koordinaten berechnet und anzeigt.

Während die Längen a₁ und a₂ des Gelenkarmes (18) unveränderlich sind und als Parameter fest im Rechner (17) abgespeichert werden können, ist die Auszuglänge (l) des Meßarmes (5) nach Lösen des Klemmhebels (6) veränderbar und läßt sich an unterschiedlichen Meßaufgaben anpassen. Es ist jedoch nicht erforderlich, die Auszuglänge (l) des Armes (5) mit einem zusätzlichen Maßstab zu ermitteln. Das aus dem Höhenmeßgerät (2) und dem Gelenkarm (18) bestehende Koordinatenmeßgerät kann vielmehr nach einem Ändern der Auszuglänge (l) und wieder erfolgter Klemmung des Armes (5) unter Benutzung einer im Meßbereich des Meßgerätes angeordneten Kalibriervorrichtung neu kalibriert werden. Hierzu werden beispielsweise die Meßpunkte der Kalibriereinrichtung mehrmals aus deutlich unterschiedlichen Stellungen des Höhenmeßgerätes (2) angetastet. Durch Gleichsetzen der Meßwerte in den verschiedenen Stellungen läßt sich dann auf die unbekannte Auszuglänge (l) rückrechnen.

Das in Figur 2 dargestellte Ausführungsbeispiel unterscheidet sich von dem nach Figur 1 in der Ausbildung des Gelenkarmes (28), mit dem das Höhenmeßgerät (2) an die Granitplatte (1) angelenkt ist. Der Gelenkarm (28) besteht aus einem Auszug (26) variabler Länge, der in einer Linearführung (22) gelagert ist. Die Führung (22) ist über ein erstes Drehgelenk (21) schwenkbar an einem an die Granitplatte angeschraubten Halteteil (20) befestigt, während der Auszug (26), der mit einem Längenmaßstab (24) versehen ist, über ein zweites Drehgelenk (23) mit der Basis des Höhenmeßgerätes (2) verbunden ist.

In der Führung (22) für den Auszug (26) befindet sich ein Gebersystem (25) zur Abtastung des Maßstabes (24). Auch hier sind die Gelenke (21) und (23) mit Winkelencodern zur Messung der Drehwinkel δ₁ und δ₂ zwischen Gelenkarm und Basis bzw. zwischen Basis und Höhenmeßgerät (2) versehen.

Der Rechner (27) des Gerätes berechnet die Koordinaten (X,Y und Z) der Tastkugel des Tastkopfes am Höhenmeßgerät (2) aus den Meßwerten δ₁ und δ₂ der Winkelgeber in den Drehgelenken (21 und 23), der gemessenen Auszuglänge r₁ des Gelenkarmes (28) und der durch einen Kalibriervorgang ermittelten Länge (l) des Meßarmes (5) am Höhenmeßgerät (2).

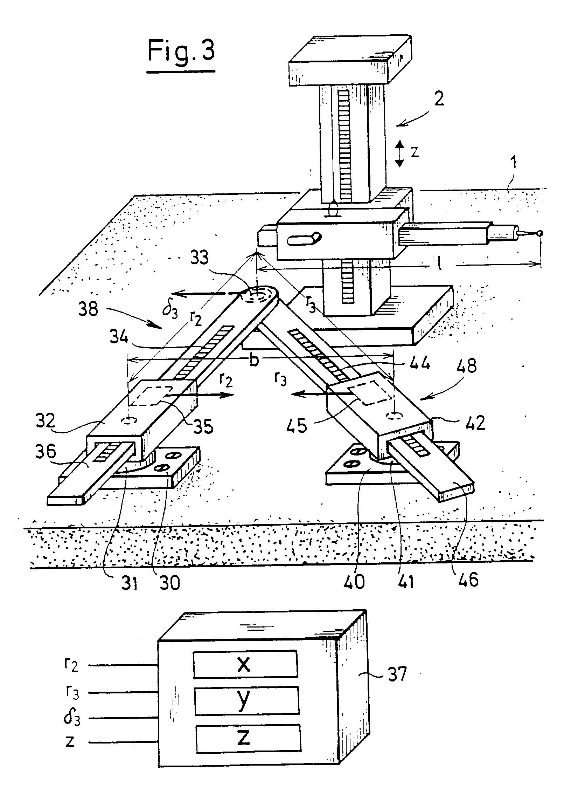

Im Ausführungsbeispiel nach Figur 3 ist ein Koordinatenmeßgerät dargestellt, welches mittels zweier Gelenkarme (38 und 48) des anhand von Figur 2 beschriebenen Typs die Position in der Ebene der Granitplatte bestimmt. Dazu trägt der über ein erstes Drehgelenk (31) mit dem Halteteil (30) und der Granitplatte schwenkbar verbundene Auszug (36) des ersten Gelenkarmes (38) einen ersten Längenmaßstab (34) und der ebenfalls über ein zweites Drehgelenk (41) gegenüber dem zweiten Halteteil (40) schwenkbare Auszug (46) des zweiten Gelenkarmes (48) einen gleichartigen Längenmaßstab (44). Beide Maßstäbe werden von entsprechenden Gebern (35 und 45) in den Linearführungen (32 und 42) der Gelenkarme (38 und 48) abgetastet und liefern die Meßwerte (r₂) und (r₃) für die Auszuglängen der beiden Gelenkarme. Beide Gelenkarme sind an einem Ende unter einem festen Abstand b zueinander an der Granitplatte befestigt und mit einem doppelten Gelenk (33) mit gemeinsamer Drehachse an der Basis des HöhenmeßgeräteS (2) angelenkt. Allein dem Gelenk (33) ist ein Winkelencoder zugeordnet, der den Drehwinkel des Höhenmeßgerätes (2) relativ zu einem der beiden Auszüge (36 oder 46) mißt.

Mit Kenntnis des Basisabstandes (b) der beiden Gelenkarme und den Auszuglängen (r₂) und (r₃), die ein Dreieck mit bekannten Seitenlängen bilden, ist die Lage der Drehachse des Gelenks (33) in der Ebene der Granitplatte eindeutig bestimmt. Von diesem Punkt ausgehend läßt sich die Lage der Tastkugel mit Hilfe des Meßwertes δ₃ des Winkelencoders im Drehgelenk (33) und der Auszuglänge (l) des Meßarmes des Höhenmeßgerätes (2) ermitteln. Die dazu nötigen trigonometischen Berechnungen führt der Rechner (37) durch, an den die Ausgänge der genannten Meßwertgeber angeschlossen sind.

In diesem Ausführungsbeispiel benötigen die Gelenkarme zwar mehr Platz und begrenzen den Bewegungsbereich und den nutzbaren Meßbereich des Gerätes, bieten jedoch den Vorteil einer größeren erzielbaren Genauigkeit.

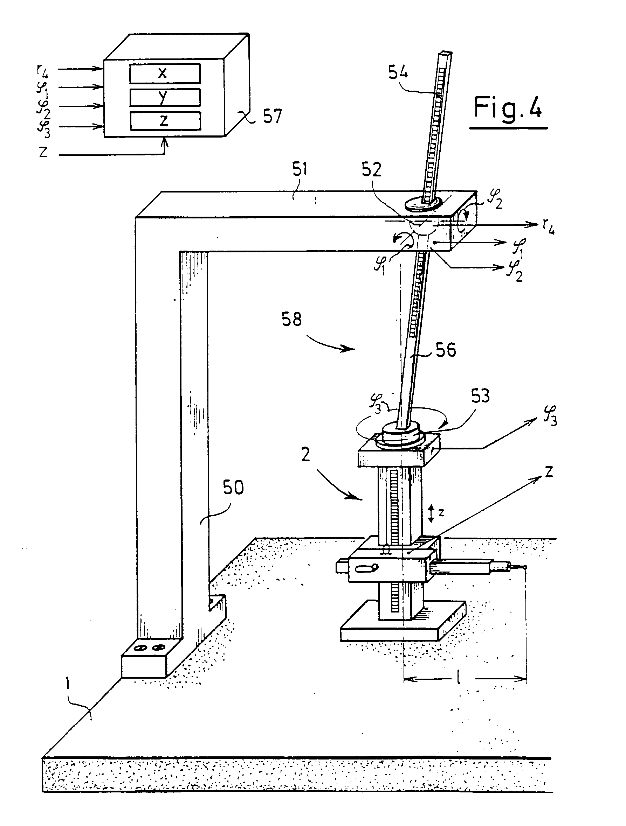

In dem in Figur 4 dargestellten Ausführungsbeispiel ist der zur Messung der Ebenenkoordinaten (X,Y) verwendete Gelenkarm (58) am oberen Ende der Säule des Höhenmeßgerätes (2) angelenkt. Der Gelenkarm (58) besteht aus einer Stange, die mit einem Ende über ein erstes kardanisches Doppelgelenk (53) allseits beweglich am Höhenmeßgerät (2) befestigt ist. Die Stange (56) ist in einer ebenfalls kardanisch an einem zweiten Gelenk (52) gelagerten Hülse verschiebbar gelagert, die an dem über den Meßbereich hinausragenden Teil (51) eines feststehenden Trägers (50) befestigt ist. In der Hülse befindet sich das Gebersystem für den an der Stange (56) angebrachten Linearmaßstab (54).

Dem Kardangelenk (52) sind außerdem zwei Drehgeber zur Messung der Winkel ζ₁ und ζ₂ zugeordnet, den die Stange (56) relativ zur Basis (1) des HöhenmeßgeräteS (2) einnimmt. Weiterhin ist dem Gelenk (53) an der Oberseite des HöhenmeßgeräteS (2) ein Drehgeber zur Messung des Winkels ζ₃ zugeordnet, um den das Höhenmeßgerät um die Vertikale gedreht werden kann.

Aus dem Längenmeßwert (r₄) des Maßstabes (54), den Winkeln ζ₁, ζ₂ und ζ₃ der Winkelencoder und dem Z-Wert des Maßstabes am Höhenmeßgerät (2) rechnet der Rechner (57) des Koordinatenmeßgerätes die kartesischen Koordinaten (X,Y und Z) der Tastkugel des Gerätes. Hierbei findet eine Umwandlung der Polarkoodinaten (r₄, ζ₁ und ζ₂) in ein auf die Ebene der Granitplatte projiziertes kartesisches Koordinatensystem statt.

Infolge der Anlenkung des Gelenkarmes (58) am oberen Ende des Höhenmeßgerätes (2) ist dessen Beweglichkeit in der Ebene im Vergleich zu den dargestellten übrigen Ausführungsbeispielen am geringsten gestört.

In einem weiteren Ausführungsbeispiel der Erfindung, sind die Gelenkarme ebenfalls am oberen Ende des HöhenmeßgeräteS angelenkt. In diesem Ausführungsbeispiel besitzt das Höhenmeßgerät im Vertikalschnitt eine etwa C-förmige Gestalt, wobei den unteren Schenkel des C eine Basisplatte bildet, auf der ein vertikaler Träger aufbaut. An diesem Träger ist ein Schlitten für den Tastkopf vertikal verschiebbar gelagert. Der Schlitten ist mit einem Bügel versehen, mit dessen Hilfe das Gerät auf einer ebenen Granitplatte verschoben werden kann und der Tastkopf in der Höhe verstellt werden kann.

Das Oberteil des Trägers springt in Richtung auf die Taststiftspitze vor und bildet den oberen Schenkel des C. An diesem vorwärts ausragenden Teil sind die Lenker mit den Maßstäben zur Messung der Position des HöhenmeßgerätS in der Ebene (X,Y) drehbar angelenkt, wobei mit (A) die Drehachse bezeichnet ist. Die Lage der Drehachse ist hierbei so gewählt, daß sie durch den Mittelpunkt der Tastkugel am Tastkopf geht bzw. nur einen geringen Abstand davon besitzt.

An der Rückseite der Granitplatte sind zwei Säulen fest angebracht. Sie tragen beide an ihrer Oberseite ein Drehlager, über das die dort mit Haltern und befestigten Lenker und ähnlich wie im Ausführungsbeispiel nach Figur 3 drehbar gehalten sind. Die Lenker und tragen an ihrer Unterseite eine Maßstabsteilung. Sie sind in dem am oberen Ende um die Achse (A) am Höhenmeßgerät drehbaren Führungsgehäusen und linear verschiebbar gelagert und stehen dort über die Vorderseite des Höhenmeßgerätes vor. Natürlich ist es auch möglich, die Lenker so anzubringen, daß sie nach hinten, über die Säulen und hinaus vorstehen.

Bei geringeren Anforderungen an die Meßgenauigkeit läßt sich ein Vorstehen der Lenker überhaupt vermeiden, wenn anstelle der starren Lenker Meßbänder verwendet werden, die über eine Umlenkrolle in das Innere der Säulen geführt und von einer dort angebrachten Feder unter Spannung gehalten werden.

An ihrem hinteren Ende tragen die Lenker je ein Gegengewicht. Mit Hilfe dieser Gegengewichte sind die Lenker und so ausbalanciert, daß sie kräftefrei auf der Oberseite des Trägers aufliegen. Hierdurch sind wechselnde Lastverhältnisse vermieden, die andernfalls auftreten würden, wenn sich der Abstand zwischen dem Höhenmeßgerät und den Säulen ändert.

Die Art und Weise, in der die Säule und das Höhenmeßgerät durch den Lenker verbunden sind, ist zeichnerisch nicht im Detail dargestellt. Es ist aber ein Drehlager an der Oberseite der Säule sowie ein Drehlager im Oberteil des Höhenmeßgerätes vorgesehen. Diesem letzteren Lager ist ein Winkelencoder zugeordnet, der die Drehlage des Höhenmeßgerätes relativ zur Ausrichtung des Lenkers mißt. Die Gehäuse, in denen die Lenker und längs geführt sind, enthalten außerdem ein photoelektrisches inkrementales Gebersystem, von dem die Maßstabsteilung der in den Lenkern enthaltenen Linearmaßstäbe abgetastet wird.

An ihrem oberen Ende sind die beiden Säulen durch einen Stab mit geringem thermischen Ausdehnungskoeffizienten wie z.B. Invar miteinander verbunden. Diese Maßnahme spielt eine besondere Rolle, da der Abstand der beiden Säulen bzw. der davon getragenen Drehpunkte, wie noch beschrieben werden wird, die Basis für die Messung der ebenen Koordinaten des Höhenmeßgerätes bildet. Wenn zusätzlich sichergestellt ist, daß die Linearmaßstäbe ebenfalls aus Material mit geringem thermischen Ausdehnungskoeffizienten bestehen, oder die thermische Ausdehnung des Stabes und der Maßstäbe durch eine Temperaturmessung erfaßt wird, läßt sich die Lage der Drehachse (A) bzw. des Höhenmeßgerätes in der Ebene (X,Y) mit sehr hoher Genauigkeit bestimmen.

Das zu vermessende Werkstück ruht auf einem Werkstücktisch, dessen Platte über einen mittig angebrachten, schlanken Fuß auf der Granitplatte befestigt ist. Durch diese Maßnahme und in Verbindung mit der freien Drehbarkeit des HöhenmeßgeräteS unter den oben angebrachten Lenkern ist es möglich, mit dem Höhenmeßgerät um das Werkstück vollständig herumzufahren bzw. das Werkstück von allen Seiten zu vermessen.

Die angesprochene freie Drehbarkeit um 360^{o} um das Werkstück herum läßt sich im übrigen auch bei den in Fig. 1 und Fig. 2 dargestellten Ausführungsbeispielen erzielen. Erreicht wird das, indem dort ebenfalls ein Werkstücktisch mit einem einzelnen, mittig angebrachten Fuß im Meßbereich aufgestellt wird und die mit (10) bzw. (20) bezeichneten, festen Bezugspunkte für den jeweils einzelnen Gelenkarm nicht an den Rand des Meßbereiches, sondern unter den Tisch gelegt werden, so daß der Gelenkarm um den Tischfuß herum drehbar ist. Ein Anlenken am oberen Ende des HöhenmeßgeräteS erübrigt sich dann.

Mit einem Koordinatenmeßgerät beschriebenen Aufbaues können sehr viele Meßaufgaben gelöst werden, die bisher einen aufwendigen Rundtisch oder umständliche Tasterformen bzw. ein Dreh-Schwenk-Gelenk erforderten wie z.B. schräge Bohrungen in prismatischen Werkstücken oder Rotationsteile.

Die Lenker mit den Linearmaßstäben im zuletzt beschriebenen Ausführungsbeispiel können außerdem durch interferometrische Längenmeßsysteme er setzt werden. Dies ist insbesondere dann vorteilhaft, wenn große Meßlängen gewünscht werden, wobei dann die Lenker unhandlich lang werden. Bei einem so modifizierten Ausführungsbeispiel befinden sich auf jeder der beiden Säulen am hinteren Ende der Grundplatte auf einer drehbar gelagerten Platte ein Lasergenerator mit angesetztem Interferometerkopf.

Auf das Drehlager am oberen Teil des Höhenmeßgerätes ist eine Trägerplatte montiert auf der das vom Interferometer angemessene Reflektorprisma befestigt ist. Ein zweites Reflektorprisma ist seinerseits drehbar auf dem Träger des Prismas gelagert und wird von einem zweiten, Interferometer auf der anderen Säule angemessen. Die Tragplatte wird mit Hilfe eines Spanndrahtes immer so nachgeführt, daß der Meßstrahl des Interferometers senkrecht auf das Reflektorprisma auftrifft. Hierzu ist der Spanndraht über zwei Rollen auf der drehbaren Platte geführt. Die Spannung des Drahtes stellt ein Gegengewicht sicher. Dieses ist in der hohlen Säule geführt. Für das zweite Prisma ist eine entsprechende Einrichtung zum Nachführen vorgesehen.

Mit Hilfe der beiden interferometrischen Meßstrahlen kann die Lage der Drehachse (A) in der waagerechten Ebene (X,Y) aufgrund einfacher trigonometrischer Beziehungen eindeutig bestimmt werden.

Zur Durchführung von Koordinatenmessungen ist es jedoch erforderlich, die genaue Lage der Tastkugel in der Ebene zu kennen. Hierzu muß außerdem die Drehlage des Höhenmeßgerätes bzw. des Trägers bestimmt werden. Dies geschieht durch einen Winkelgeber, der den Winkel δ₄ zwischen der Taststiftachse und einem der beiden Lenker bzw. Meßstrahlen angibt. Danach ist es möglich, bei Kenntnis des Abstandes (l) zwischen Tastkugel und der Drehachse (A) Tastkugelkoordinaten (X und Y) in der Ebene zu bestimmen.

Es ist zweckmäßig, diesen Abstand (l) möglichst klein zu halten, da dann für die Messung des Winkels δ₄ nur ein preiswerter Geber mit geringer Auflösung benötigt wird, der keine hohe Meßgenauigkeit besitzen muß. Wenn diese Voraussetzung nicht gegeben ist und mit Hilfe der Spanndrähte die Referenzlinie, gegen die der Winkelgeber mißt, nicht ausreichend genau festgelegt wird, kann ein starrer Lenkerstab anstelle eines der Spanndrähte oder zusätzlich verwendet werden.

Da sich die Tastkugel unterhalb der durch die Meßstrahlen r₄ und r₅ aufgespannten Ebene befindet können Meßfehler auftreten, wenn die Z-Führung für den Tastkopfträger nicht stets lotrecht zu dieser Ebene ausgerichtet ist. Solche Verkippungen können beispielsweise durch dynamische Kräfte beim Bewegen des Höhenmeßgerätes hervorgerufen werden oder durch die mangelnde Ebenheit der Granitplatte bedingt sein, auf der das Höhenmeßgerät mittels Luftlagern gleitet. Es ergibt sich dann ein von der Höhe (Z) abhängiger Lagefehler der Tastkugel in der Ebene (X,Y) abhängig von dem mit α₄ bezeichneten Kippwinkel.

In einer zur Durchführung von hochgenauen Messungen geeigneten Ausführungsform sind in die Grundplatte des Höhenmeßgerätes drei Induktivtaster eingebaut, die den Abstand zur Oberfläche der Granitplatte messen. Aus den Signalen dieser Induktivtaster läßt sich der Kippwinkel α₄ bzw. lassen sich die Korrekturkoordinaten (X₂, Y₂) berechnen, die die Verkippung bezüglich der Lage in der Ebene (X,Y) hervorruft. Die Verkippung bewirkt außerdem einen Höhenfehler (Z₁), der vom Abstand zwischen dem Z-Maßstab und der Tastkugel abhängt. Auch dieser Korrekturwert kann mit Hilfe der Sensoren ermittelt werden. Die erforderlichen Berechnungen der Korrekturdaten werden in einem Rechner durchgeführt. Diesem Rechner sind neben den Meßwerten der Induktivtaster die Meßwerte (r₄, r₅, δ₄ und Z) zugeführt, die von den Interferometern, dem Winkelgeber und vom Geber des Maßstabes geliefert werden. Da die beschriebene Art der Korrektur des Kippfehlers voraussetzt, daß die Oberfläche der Platte eben ist, ist im Speicher des Rechner außerdem eine zweidimensionale Korrekturmatrix abgespeichert, in der alle Ebenheitsabweichungen erfaßt sind. Die Erfassung der Ebenheitsabweichungen, d.h. die Topographie der Oberfläche der Platte kann beispielsweise in einem einmaligen Kalibrierlauf mit Hilfe von elektronischen Neigungsmessern ermittelt werden.

In den bisherigen Ausführungsbeispielen sind allein handbediente Koordinatenmeßgeräte gemäß der Erfindung beschrieben worden, d.h. das jeweilige Höhenmeßgerät wurde von Hand über die Granitplatte bewegt.

In einer motorisierten Version der Meßeinrichtung greift an der Rückseite des Ständers des motorisierten Meßgerätes eine Schubstange an. Die Schubstange wird von einem Linearantrieb bewegt, der sich in einem Gehäuse auf einem Schlitten befindet, der seinerseits über einen zweiten Linearantrieb entlang eines Querträgers zwischen den beiden Säulen verschiebbar ist, von denen die drehbaren Lenker gehalten sind. Die beiden Linearantriebe bewegen das Meßgerät in der Ebene (X,Y).

Die Schubstange greift etwa in Höhe des Schwerpunktes des Höhenmeßgerätes an. Es kann deshalb schnell verfahren werden, ohne daß störende Kippmomente aufteten.

Da es aufgrund des im Ausführungsbeispiel speziell dargestellten Antriebes nicht möglich ist, von allen Seiten um das Werkstück herumzufahren, ist der Tisch als Drehtisch oder als Schalttisch ausgebildet, der mehrere definierte Winkelstellungen ψ in Bezug auf die Grundplatte einnehmen kann.

## Patentansprüche

1. Koordinatenmeßgerät auf der Basis eines in einer Ebene frei verschiebbaren Trägers (3), der einen vertikal verschiebbaren Tastkopf (7) und einen die vertikale Position (Z) des Tastkopfes messenden Maßstab (8) besitzt, dessen Tastkopf (7) einen in mehreren Raumrichtungen ansprechenden Taststift trägt und der mit einer Einrichtung zur Messung der Lage des Trägers in der Ebene (X, Y) versehen ist, dadurch gekennzeichnet, daß der Träger über einen oder zwei Arme (18; 28; 38; 48; 58) gelenkig mit einem oder zwei feststehenden Bezugspunkten (10; 20; 30, 40; 50) verbunden ist, wobei Drehgeber bzw. Längenmeßeinrichtungen vorgesehen sind, die Winkel- bzw. Längenmessungen von dem einen oder den zwei festen Punkten aus ermöglichen, und daß jeder die Drehgeber bzw. Längenmeßeinrichtungen tragende, einen Bezugspunkt mit dem Träger verbindende Arm über ein Drehgelenk mit vertikaler Drehachse an dem Träger angelenkt ist derart, daß der Träger in der Ebene frei drehbar ist.

2. Koordinatenmeßgerät nach Anspruch 1, dadurch gekennzeichnet, daß ein Gelenkarm (18) aus drei Gelenken (11, 12, 13) besteht und den Gelenken Drehgeber (α, β, γ) zugeordnet sind.

3. Koordinatenmeßgerät nach Anspruch 1, dadurch gekennzeichnet, daß ein Gelenkarm (28) aus zwei Gelenken (21,23) und einem Auszug (26) variabler Länge (r₁) besteht und den Gelenken Drehgeber (δ₁ δ₂) und dem Auszug ein Maßstab (24) zugeordnet sind.

4. Koordinatenmeßgerät nach Anspruch 1, dadurch gekennzeichnet, daß zwei Gelenkarme (38,48) mit jeweils zwei Gelenken (31,33;41,33) und je einem Auszug (36,46) variabler Länge (r₂,r₃) vorgesehen sind und jedem Auszug ein Maßstab (34,44) sowie mindestens einem Gelenk (33) ein Drehgeber (δ₃) zugeordnet ist.

5. Koordinatenmeßgerät nach Anspruch 1, dadurch gekennzeichnet, daß die Längenmeßeinrichtungen Laserinterferometer sind.

6. Koordinatenmeßgerät nach Anspruch 1, dadurch gekennzeichnet, daß für die Ermittlung der Schieflage (α₄) des Trägers gegen die Vertikale (Z) Zusatzmeßeinrichtungen vorgesehen sind sowie ein Rechner, der aus den Meßwerten der Zusatzmeßeinrichtungen und dem gemessenen Höhenwert Korrekturwerte berechnet und mit den gemessenen Lagekoordinaten (X,Y) bzw. mit der Höhenkoordinate (Z) verknüpft.

7. Koordinatenmeßgerät nach Anspruch 6, dadurch gekennzeichnet, daß die Zusatzmeßeinrichtungen elektronische Neigungsmesser im Träger sind.

8. Koordinatenmeßgerät nach Anspruch 6, dadurch gekennzeichnet, daß die Zusatzmeßeinrichtungen mindestens drei beabstandete Sensoren im Fuß des Trägers sind, die den Abstand zur ebenen Führung des Trägers messen.

9. Koordinatenmeßgerät nach Anspruch 8, dadurch gekennzeichnet, daß die Topographie der ebenen Führung in einem separaten Meßprozess aufgenommen und als zweidimensionale Korrekturmatrix gespeichert ist, und daß der Rechner die Schieflage aus der Korrekturmatrix und den Meßwerten der Sensoren berechnet.

10. Koordinatenmeßgerät nach einem der Ansprüche 1-9, dadurch gekennzeichnet, daß der oder die Gelenkarme (58) am oberen Ende des verschiebbaren Trägers (2) angelenkt sind.

11. Koordinatenmeßgerät nach Anspruch 10, dadurch gekennzeichnet, daß der Träger (2) um 360^{o} frei unter dem bzw. den Lenkern drehbar ist.

12. Koordinatenmeßgerät nach Anspruch 10, dadurch gekennzeichnet, daß die bzw. der Lenker mittels eines Drehgelenkes am Träger befestigt ist, dessen vertikale Drehachse durch die Tastkugel des am HöhenmeßgeräteS befestigten Tastkopfes geht bzw. eine geringe Entfernung von der Tastkugel besitzt.

13. Koordinatenmeßgerät nach Anspruch 1, dadurch gekennzeichnet, daß der Träger auf einer im Querschnitt großflächigeren Grundplatte steht und im Verschiebebereich des Trägers ein Werkstücktisch vorgesehen ist, der auf einem mittig angeordneten schlanken Fuß ruht, derart, daß der Träger mit seiner Grundplatte unter die Tischfläche fahren kann.

14. Koordinatenmeßgerät nach Anspruch 13, dadurch gekennzeichnet, daß der feststehende Bezugspunkt der Fuß des Werkstücktisches ist und der Gelenkarm drehbar an diesem befestigt ist.

15. Koordinatenmeßgerät nach Anspruch 10, dadurch gekennzeichnet, daß die Gelenkarme so ausbalanciert sind, daß sie im wesentlichen kräftefrei auf der Oberseite des Trägers aufliegen.

16. Koordinatenmeßgerät nach Anspruch 15, dadurch gekennzeichnet, daß die beiden Gelenkarme mittels zweier vertikaler Ständer an der ebenen Führung des Trägers befestigt sind und die Ständer an ihren oberen Enden durch einen starren Querstab mit geringem Wärmeausdehnungskoeffizienten befestigt sind.

17. Koordinatenmeßgerät nach Anspruch 16, dadurch gekennzeichnet, daß die Gelenkarme über ihren Verbindungspunkt an der Oberseite des Trägers hinaus vorstehen.

18. Koordinatenmeßgerät nach Anspruch 1, dadurch gekennzeichnet, daß ein erster Antrieb für die Vertikalverschiebung des Tastkopfes am Träger und ein zweiter Antrieb für die Horizontalverschiebung des Trägers vorgesehen ist.

19. Koordinatenmeßgerät nach Anspruch 18, dadurch gekennzeichnet, daß der zweite Antrieb in Höhe des Schwerpunktes des Trägers an diesem angreift.

20. Koordinatenmeßgerät nach Anspruch 18, dadurch gekennzeichnet, daß der zweite Antrieb ein zwischen zwei Stützen an einer Seite des Meßbereiches des Koordinatenmeßgerätes gesetzter Linearantrieb ist, der seinerseits einen zweiten, senkrecht dazu wirkenden Linearantrieb trägt und daß im Verschiebebereich des Trägers ein Drehtisch für das zu vermessende Werkstück angeordnet ist.

## Claims

1. A coordinate measuring apparatus based on a carrier (3) being freely displaceable in a plane and comprising a probe, which is displaceable vertically, and a scale, which measures the vertical position (Z) of the probe, wherein said probe carries a probe element on a stylus, which is responsive to several dimensional directions and wherein said carrier comprises a device for measuring the position of the carrier in a plane (X, Y), characterized by the fact that said carrier is pivotally connected to one or two fixed reference points (10; 20; 30, 40; 50) by means of one or two arms, and that rotary encoders or linear measuring devices are provided for measuring the angular or linear position starting from said one or two fixed points, and further characterized by the fact that each arm carrying rotary encodes or linear measuring devices and connecting a fixed point to the carrier is connected to the carrier via a pivot joint having a vertical axis in such a way that the carrier is freely rotatable in said plane.

2. The coordinate measuring apparatus of claim 1, characterized in that the one arm is a linkage arm (28) and comprises three links (11, 12, 13) and angle encoders (α, β, γ) corresponding to respective ones of said links.

3. The coordinate measuring apparatus of claim 1, characterized in that the one arm is a linkage arm (28) and comprises two links (21, 23) and a pull-out arm (26) of varying length (r₁) and rotary encoders (δ₁, δ₂) associated to the links and a scale (24) associated to the pull-out arm.

4. The coordinate measuring apparatus of claim 1, characterized in that the two arms are two linkage arms (38, 48), each having two links (31, 33; 41, 43) and a pull-out arm (36, 46) variable length (r₂, r₃), each pull-out arm being associated with a scale (34, 44) and at least one link being associated with a rotary encoder (δ₃).

5. The coordinate measuring apparatus of claim 1 wherein said linear measuring devices are interferometers.

6. The coordinate measuring apparatus of claim 1, characterized by ancillary measuring devices determining the tilt angle (α₄) of the carrier with respect to the vertical coordinate axis (Z) and further characterized by a computer for computing correction values from the signals of said ancillary measuring devices and said elevation coordinate value (Z) and for combining said second correction values with the measured position coordinates (X, Y) and with the elevation coordinate value (Z).

7. The coordinate measuring apparatus of claim 6, characterized by the fact that said ancillary devices are electronic inclination measuring device mounted to said carrier.

8. The coordinate measuring apparatus of claim 6, characterized by the fact that said ancillary measuring devices are at least three mutually spaced sensors mounted in the foot of the carrier for measuring the distance to the planar guide surface of said carrier.

9. The coordinate measuring apparatus of claim 8, characterized by the fact that the topography of said planar guide surface is determined in a separate measuring process and stored as a two-dimensional corrective matrix; and by the fact that the computer calculates said tilt angle by using said corrective matrix and the measured values of said sensors.

10. The coordinate measuring apparatus according to one of claims 1-9, characterized in that one or more linkage arms (58) are connected to the upper end of the displaceable carrier (2).

11. The coordinate measuring apparatus according to claim 10, characterized in that the carrier (2) is freely rotatable around 360^{o} under the link or links.

12. The coordinate measuring apparatus of claim 10, characterized in that one or more of the links are connected to the carrier by means of a rotational joint defining a vertical rotational axis (A), which passes the contact ball at the outer end of said measuring head being mounted on said carrier, or which axis (A) is in only a small distance to the contact ball.

13. The coordinate measuring apparatus of claim 1, characterized in that the carrier stands on top of a plate of greater dimensions and in that a workpiece table is provided in the displacement space of the carrier, which table rests on a central, narrow foot being configured to allow the plate of the carrier to be moved under said table.

14. The coordinate measuring apparatus of claim 13, characterized in that said fixed reference point being said foot of said table; and, said linkage arm being pivotally connected to said foot.

15. The coordinate measuring apparatus of claim 10, characterized in that the linkage arms are counterbalanced so that the latter apply substantially no weight to the upper end of said carrier.

16. The coordinate measuring apparatus of claim 15, characterized in that the linkage arms are connected to two mutually spaced vertical stands attached to said planar guide and the upper ends of said stands being interconnected by a rigid transverse member being made of a material having a low thermal coefficient of expansion.

17. The coordinate measuring apparatus of claim 16, characterized in that the linkage arms extend outwardly beyond their connecting point (A) at the upper end of the carrier.

18. The coordinate measuring apparatus of claim 1, characterized by a first drive for driving said probe in a vertical direction (Z) along carrier and by a second drive for displacing the carrier horizontally.

19. The coordinate measuring apparatus of claim 18, characterized in that said second drive acts on said carrier at the center of gravity of said carrier.

20. The coordinate measuring apparatus of claim 18, characterized in that said second drive is a linear drive between two supports mounted on one side adjacent said measuring region; and carries a further linear drive for engaging and acting in a second direction transverse to the first direction, and further that a rotary table carrying the workpiece to be measured is arranged in the displacement region of the carrier.

## Revendications

1. Appareil de mesure de coordonnées, constitué sur la base d'un support (3) librement déplaçable dans un plan et qui possède une tête de palpage (7) déplaçable verticalement et une échelle graduée (8) qui mesure la position verticale (Z) de la tête de palpage (7) qui porte une tige de palpage, qui répond dans plusieurs directions de l'espace, et est équipé d'un dispositif servant à mesurer la position du support dans le plan (X,Y), caractérisé en ce que le support est raccordé de façon articulée, par l'intermédiaire d'un ou de deux bras (18;28;38;48;58), à un ou deux points de référence fixes (10;20;30;40;50), qu'il est prévu des résolveurs ou des dispositifs de mesure de longueurs permettant d'effectuer les mesures d'angles ou de longueurs à partir d'un ou des deux points fixes, et que chaque bras, qui porte les résolveurs ou les dispositifs de mesure de longueurs et raccorde un point de référence au support, est articulé par l'intermédiaire d'une articulation tournante à l'axe vertical de rotation sur le support, de telle sorte que le support peut tourner librement dans le plan.

2. Appareil de mesure de coordonnées selon la revendication 1, caractérisé en ce qu'un bras articulé (18) est constitué par trois articulations (11,12,13) et que des résolveurs (α,β,γ) sont associés aux articulations.

3. Appareil de mesure de coordonnées selon la revendication 1, caractérisé en ce qu'un bras articulé (28) est constitué de deux articulations (21,23) et par une rallonge (26) de longueur variable (r₁) et que des résolveurs (δ₁,δ₂) sont associés aux articulations et qu'une échelle graduée (24) est associée au rallonges.

4. Appareil de mesure de coordonnées selon la revendication 1, caractérisé en ce qu'il est prévu deux bras articulés (38,48) comportant respectivement deux articulations (31,33;41,43) et respectivement une rallonge (36,46) de longueur variable (r₂,r₃) et qu'une échelle graduée (34,44) est associée à chaque rallonge et qu'un résolveur (δ₃) est associé à au moins une articulation (33).

5. Appareil de mesure de coordonnées selon la revendication 1, caractérisé en ce que les dispositifs de mesure de longueurs sont des interféromètres laser.

6. Appareil de mesure de coordonnées selon la revendication 1, caractérisé en ce que pour la détermination de l'angle d'inclinaison (4) du support par rapport à la verticale (Z), il est prévu un dispositif supplémentaire de mesure, ainsi qu'un calculateur, qui calcule les valeurs de correction à partir des valeurs de mesure des dispositifs supplémentaires de mesure et de la valeur mesurée de hauteur et les combine aux coordonnées mesurées de position (X,Y) ou à la coordonnée de hauteur (Z).

7. Appareil de mesure de coordonnées selon la revendication 6, caractérisé en ce que les dispositifs supplémentaires de mesure sont des clinomètres électroniques disposés dans le support.

8. Appareil de mesure de coordonnées selon la revendication 6, caractérisé en ce que les dispositifs supplémentaires de mesure sont au moins trois capteurs distants disposés dans le pied du support et qui mesurent la distance par rapport au guide plan du support.

9. Appareil de mesure de coordonnées selon la revendication 8, caractérisé en ce que la topographie du guide plan est enregistrée lors d'un processus de mesure séparé et est mémorisée sous la forme d'une matrice bidimensionnelle de correction et que le calculateur calcule la position oblique à partir de la matrice de correction et des valeurs de mesure des capteurs.

10. Appareil de mesure de coordonnées selon l'une des revendications 1-9, caractérisé en ce que le ou les bras articulés (58) sont articulés sur l'extrémité supérieure du support mobile (2).

11. Appareil de mesure de coordonnées selon la revendication 10, caractérisé en ce que le support (2) peut pivoter librement sur 360° au-dessous du ou des bras articulés.

12. Appareil de mesure de coordonnées selon la revendication 10, caractérisé en ce que le ou les bras articulés sont fixés sur le support au moyen d'une articulation tournante, dont l'axe vertical de rotation traverse la sphère de palpage de la tête de palpage fixée sur l'appareil de mesure de hauteur ou est séparée par un faible distance de cette sphère de palpage.

13. Appareil de mesure de coordonnées selon la revendication 1, caractérisé en ce que le support est installé verticalement sur une plaque de base possédant une surface plus étendue en coupe transversale et qu'il est prévu, dans la zone de déplacement du support, une table porte-pièce, qui est montée sur un pied élancé centré de telle sorte que le support peut se déplacer, avec sa plaque de base, au-dessous de la surface de la table.

14. Appareil de mesure de coordonnées selon la revendication 13, caractérisé en ce que le point de référence fixe est le pied de la table porte-pièce et que le bras articulé est fixé de manière à pouvoir pivoter sur cette table.

15. Appareil de mesure de coordonnées selon la revendication 10, caractérisé en ce que les bras articulés sont équilibrés de telle sorte qu'ils prennent appui, sensiblement sans l'application avec une force, sur la face supérieure du support.

16. Appareil de mesure de coordonnées selon la revendication 15, caractérisé en ce que les deux bras articulés sont fixés, au moyen de deux montants verticaux, sur le guide plan du support, et que les montants sont fixés, au niveau de leurs extrémités supérieures, par une barre transversale rigide possédant un faible coefficient de dilatation thermique.

17. Appareil de mesure de coordonnées selon la revendication 16, caractérisé en ce que les bras articulés font saillie au-delà de leur point de raccordement sur la face supérieure du support.

18. Appareil de mesure de coordonnées selon la revendication 1, caractérisé en ce qu'il est prévu un premier dispositif d'entraînement pour le déplacement vertical de la tête de palpage sur le support et un second dispositif d'entraînement pour le déplacement horizontal du support.

19. Appareil de mesure de coordonnées selon la revendication 18, caractérisé en ce que le second dispositif d'entraînement attaque le support au niveau du centre de gravité de ce dernier.

20. Appareil de mesure de coordonnées selon la revendication 18, caractérisé en ce que le second dispositif d'entraînement est un dispositif d'entraînement linéaire, qui est monté entre deux appuis d'un côté de la plage de mesure de l'appareil de mesure de coordonnées et comporte pour sa part un second dispositif d'entraînement linéaire qui agit perpendiculairement au précédent, et qu'un plateau rotatif pour la pièce à usiner devant être mesurée est disposé dans la zone de déplacement du support.
